Europäisches Patentamt

European Patent Office

Office européen des brevets

(11) Veröffentlichungsnummer: **0 483 499 A2**

## (12) EUROPÄISCHE PATENTANMELDUNG

(21) Anmeldenummer: **91115602.4**

(22) Anmeldetag: **13.09.91**

(51) Int. Cl.5: **B27F 1/04**, B27G 5/02

(30) Priorität: **31.10.90 DE 4035512**

(43) Veröffentlichungstag der Anmeldung:
**06.05.92 Patentblatt 92/19**

(84) Benannte Vertragsstaaten:
**AT BE CH DK ES FR GB IT LI NL**

(71) Anmelder: **Hirsch, Wilhelm**
**Gerhart-Hauptmann-Strasse 47**
**W-7417 Pfullingen(DE)**

(72) Erfinder: **Hirsch, Wilhelm**
**Gerhart-Hauptmann-Strasse 47**
**W-7417 Pfullingen(DE)**

(74) Vertreter: **Liebau, Gerhard, Dipl.-Ing.**
**Birkenstrasse 39 Postfach 22 02 29**
**W-8900 Augsburg 22(DE)**

(54) **Holzbearbeitungsmaschine zur Endenbearbeitung von Rahmenhölzern.**

(57) Eine Holzbearbeitungsmaschine zur Endenbearbeitung von Rahmenhölzern weist einen Arbeitstisch (2), ein Sägeaggregat (7) mit horizontaler Sägenachse und ein Fräsaggregat (8) mit vertikaler Frässpindel auf. Diese beiden Aggregate (7, 8) sind in Richtung der Sägeebene (S) relativ zum Arbeitstisch (2) bewegbar. Es ist ein gegenüber dem Arbeitstisch (2) schwenkbares und feststellbares Anschlagslineal (12) mit einem mittels einer Millimeter-Skala (23) einstellbaren Längenanschlag (22) vorgesehen. An einem mit dem Arbeitstisch (2) verbundenen Traggestell (14) ist oberhalb des Arbeitsbereiches des Kreissägeblattes (9) und der Fräser (11) eine die vertikale Schwenkachse (13) des Anschlagslineals (12) enthaltende Schwenklagerung (15) angeordnet. Diese Schwenkachse (13) ist in der Nähe der Schnittlinie der Sägeebene (S) und der durch eine vertikale Anschlagsfläche (12a) des Anschlagslineals (12) verlaufenden Vertikalebene angeordnet. An dem Anschlagslineal (12) ist ein vertikaler Rahmen (21) mit einem Kragarm (20) vorgesehen, dessen freies Ende (20a) mit der Schwenkachse (13) verbunden ist. Die der Sägeebene (S) zugekehrte und sich parallel hierzu erstreckende Tischlängsseite (2a) reicht bis dicht an die Sägeebene (S) heran.

Fig. 1

EP 0 483 499 A2

Die Erfindung betrifft eine Holzbearbeitungsmaschine zur Endenbearbeitung von Rahmenhölzern, insbesondere für Fenster- und Türrahmen, mit einem Arbeitstisch, einem Sägeaggregat mit einem um eine horizontale Achse rotierenden Kreissägeblatt und einem Fräsaggregat mit vertikaler Frässpindel und mehreren hieran angeordneten Fräsern, wobei die beiden Aggregate in Richtung der Sägeebene relativ zum Arbeitstisch bewegbar sind und am Arbeitstisch ein um eine vertikale Schwenkachse schwenkbares und in der eingestellten Winkelstellung feststellbares Anschlagslineal mit einer vertikalen Anschlagsfläche für eine Längsseite des Rahmenholzes und mit einem mittels einer Millimeter-Skala einstellbaren Längenanschlag vorgesehen ist, und wobei die Schwenkachse an oder in der Nähe der Schnittlinie der Sägeblattebene und der durch die vertikale Anschlagfläche verlaufenden Vertikalebene angeordnet ist.

Bevor die Rahmenhölzer zu Fenster- oder Türrahmen zusammengesetzt werden können, müssen sie genau auf Länge bearbeitet und hierbei an ihren Enden auch mit Zapfen und Schlitzen bzw. sogenannten Minizinken versehen werden. Holzbearbeitungsmaschinen der eingangs erwähnten Art dienen hauptsächlich zur Endenbearbeitung von Rahmenhölzern, bei denen die aneinandergrenzenden Rahmenhölzer einen von 90° abweichenden Winkel einschließen, wie es z.B. bei Schrägfenstern oder aus Segmenten zusammengesetzten Bogenfenstern der Fall ist. Die besondere Schwierigkeit bei der Endenbearbeitung der Rahmenhölzer für Schrägfenster und Segmentbögen besteht darin, diese so zu bearbeiten, daß das betreffende Rahmenholz nach der Bearbeitung beider Enden auch die tatsächlich gewünschte Länge aufweist. Bei Holzbearbeitungsmaschinen ist es üblich, die gewünschte Länge dadurch zu erreichen, daß ein Längenanschlag unter Zuhilfenahme einer Millimeter-Skala eingestellt wird. Diese einfachen Längenanschläge versagen jedoch, wenn der Arbeitstisch um eine von der Sägeblattebene entfernte Achse geschwenkt wird, da sich dann das zu bearbeitende Ende des Rahmenholzes beim Verschwenken des Arbeitstisches mehr oder weniger von der Sägeebene entfernt. Aus diesem Grunde wurde bei der Holzbearbeitungsmaschine der eingangs erwähnten Art (DE 21 61 358 A1) die Schwenkachse an der Schnittlinie der Sägeebene und der durch die vertikale Anschlagfläche verlaufenden Vertikalebene angeordnet.

Bei einer derartigen bekannten Holzbearbeitungsmaschine (DE 21 61 358 A1) sind das Sägeaggregat und das Fräsaggregat stationär am Maschinengestell angeordnet. Es ist ein gegenüber dem Maschinengestell verfahrbarer Arbeitstisch vorgesehen. Auf diesem Arbeitstisch ist das Anschlagslineal abgestützt und schwenkbar gelagert.

Zu diesem Zweck sind mit dem Arbeitstisch zwei bogenförmige Führungsschienen fest verbunden, die je einen bogenförmigen Führungsschlitz aufweisen. Das Anschlagslineal weist zwei Laschen auf, in denen je ein Schraubbolzen mit einer Flügelmutter angeordnet ist. Jeder dieser beiden Schraubbolzen greift in einen der beiden Führungsschlitze ein. Mittels der Schraubbolzen und der Flügelmuttern kann das Anschlagslineal in der jeweils eingestellten Winkellage gegenüber den Führungsschienen und damit gegenüber dem Arbeitstisch festgestellt werden. Damit die Schraubbolzen nach dem Lösen der Flügelmuttern in den bogenförmigen Führungsschlitzen bewegt werden können, ist ein gewisses Spiel erforderlich. Schon das geringste Spiel wirkt sich jedoch auf die Genauigkeit aus, denn infolge dieses Spieles kann sich die allein durch die bogenförmigen Führungsschlitze bestimmte Schwenkachse des Anschlagslineals verlagern. Es stimmen dann die mittels des Längenanschlags eingestellte Länge und auch der eingestellte Winkel nicht mehr. Dies hat zur Folge, daß am fertig bearbeiteten Rahmenholz sowohl der Gehrungswinkel als auch die Länge nicht stimmen. Beim Zusammensetzen mehrerer Rahmenhölzer zu einem Rundbogen addieren sich die Fehler. Weiterhin ist bei der bekannten Holzbearbeitungsmaschine das Anschlagslineal als U-förmige Anschlagschiene ausgebildet, bei der die beiden U-Schenkel horizontal angeordnet sind und der U-Steg die vertikale Anschlagsfläche bildet. Die beiden U-Schenkel dienen wechselweise zur Abstützung des Rahmenholzes, welches über jeweils zwei am gegenüberliegenden U-Schenkel angeordnete Spannzylinder angedrückt wird. Da sich die beiden U-Schenkel beim Verschwenken der Anschlagschiene aus ihrer senkrecht zur Sägeebene verlaufenden Grundstellung der Sägeebene nähern und somit in den Arbeitsbereich der Säge und auch des Fräsaggregates gelangen würden, müssen die U-Schenkel einen größeren Abstand von der Sägeebene haben. Dies wiederum hat den Nachteil, daß das Rahmenholz an dem zu bearbeitenden Ende ungenügend unterstützt wird. Außerdem erfordert die bekannte Holzbearbeitungsmaschine verhältnismäßig viel Platz zu ihrer Aufstellung, denn es muß nicht nur genügend Platz für das Verfahren des Arbeitstisches vorhanden sein, sondern auch zusätzlicher Platz für das meist über den Arbeitstisch in größerer Länge hinausragende Rahmenholz, wobei dieser Platzbedarf noch dadurch vergrößert wird, daß das Rahmenholz in verschiedenen Winkelstellungen gegenüber der Sägeebene angeordnet sein kann. Durch das weit über den Arbeitstisch hinausragende Rahmenholz, welches bei der Endenbearbeitung zusammen mit dem Arbeitstisch verfahren wird, besteht außerdem erhöhte Unfallgefahr, wenn nicht der gesamte mögliche Arbeitsraum entsprechend eingezäunt ist.

Bei einer ähnlich ausgestalteten bekannten Holzbearbeitungsmaschine (DE 37 17 731 A1) ist ein gegenüber dem Maschinengestell verfahrbarer Rollwagen vorgesehen, der den eigentlichen Arbeitstisch trägt. Der Arbeitstisch weist ein fest mit ihm verbundenes Anschlagslinial für das Rahmenholz auf. Die Schwenkachse des Arbeitstisches soll in der Ebene liegen, in der sich auch die dem Rahmenholz zugekehrte Seitenfläche des Kreissägeblattes bewegt. Da sich die Schwenkachse somit im Arbeitsbereich der Kreissäge befinden würde, sind die einander zugewandten Flächen des Arbeitstisches und des Rollwagens mit ineinandergreifenden Teilen einer kreisbogenförmig gebogenen Führung versehen. Die Führung hat einen Radius, der dem Abstand der Führung von der Schwenkachse entspricht. Diese Art der schwenkbaren Lagerung des Arbeitstisches ist jedoch verhältnismäßig teuer in der Herstellung, denn es müssen sowohl der Arbeitstisch als auch der Rollwagen mit ineinandergreifenden kreisbogenförmigen Führungen versehen werden, die sehr genau bearbeitet werden müssen, wobei außerdem noch zwischen den Führungen Zylinderrollen vorgesehen sein müssen, um die Reibung zu vermindern. Auch diese bekannte Holzbearbeitungsmaschine erfordert wie die eingangs beschriebene Holzbearbeitungsmaschine verhältnismäßig viel Platz zu ihrer Aufstellung. Da sich der Arbeitstisch beim Verschwenken aus seiner senkrecht zur Sägeebene verlaufenden Grundstellung jeweils mit einer seiner Seiten der Sägeebene nähert und somit in den Arbeitsbereich der Kreissäge gelangen würde, muß der Arbeitstisch einen größeren Abstand von der Sägeebene haben. Dies hat den Nachteil, daß das Rahmenholz an dem zu bearbeitenden Ende ungenügend unterstützt wird bzw. kurze Rahmenhölzer überhaupt nicht bearbeitet werden können.

Bei einer anderen bekannten Holzbearbeitungsmaschine zur Endenbearbeitung von Rahmenhölzern (DE 89 07 800 U1) ist auf einem Arbeitstisch ein Anschlagslineal um eine vertikale Schwenkachse schwenkbar gelagert. Die Schwenkachse des Anschlagslineals ist dabei mit größerem Abstand von der Sägeebene vorgesehen. An dem Anschlagslineal ist ein Längenanschlag verschiebbar und feststellbar. Es sind drei verschiedene elektronische Meßgeber vorgesehen, von denen einer den Drehwinkel der Schwenkachse, ein zweiter den Abstand des Anschlages von der Schwenkachse und ein dritter den Abstand zwischen einem bestimmten Fixpunkt am Arbeitstisch und dem Werkzeug erfaßt. Die Meßsignale dieser drei Meßgeber werden einer Auswerte- und Verarbeitungseinheit zugeführt, in der eingegebene Kalibriersignale zusammen mit den Meßsignalen so verarbeitet werden, daß die Einjustierung der Maschine auf das zu bearbeitende Werkstück manuell nach den Anzeigen eines Anzeigeterminals oder automatisch durch von der Auswerte- und Verarbeitungseinheit angesteuerte Positioniereinheiten erfolgt. Diese Holzbearbeitungsmaschine ist wegen des erforderlichen Rechners verhältnismäßig kompliziert im Aufbau. Noch komplizierter wird der Aufbau, wenn die Maschine vollautomatisch vom Rechner durch Positioniereinheiten eingestellt werden soll. Bei manueller Einstellung ist die Handhabung umständlich, denn es muß zunächst das gewünschte Längenmaß eingetippt werden. Erst dann kann man am Display des Rechners die einzustellende Stellung des Längenanschlages ablesen und den Längenanschlag einstellen.

Der Erfindung liegt die Aufgabe zugrunde, eine Holzbearbeitungsmaschine zur Endenbearbeitung von Rahmenhölzern, insbesondere für Fenster- und Türrahmen, der eingangs erwähnten Art zu schaffen, die einfach im Aufbau und in der Handhabung ist, eine maßgenaue Bearbeitung der Rahmenhölzer ermöglicht, sowie eine gute Abstützung des Rahmenholzes in der Nähe des jeweils zu verarbeitenden Endes gewährleistet. Dies wird nach der Erfindung dadurch erreicht, daß an einem mit dem Arbeitstisch oder dem Maschinengestell verbundenen Traggestell oberhalb des Arbeitsbereiches des Kreissägeblattes und der Fräser eine die vertikale Schwenkachse enthaltende Schwenklagerung angeordnet ist, daß an dem Anschlagslineal ein vertikaler Rahmen mit einem Kragarm vorgesehen ist, dessen freies Ende mit der Schwenkachse verbunden ist, und daß die der Sägeebene zugekehrte und sich parallel hierzu erstreckende Tischlängsseite bis dicht an die Sägeebene heranreicht.

Durch die Anordnung der Schwenklagerung oberhalb des Arbeitsbereiches des Kreissägeblattes und der Fräser und die Verbindung des Anschlagslieals über einen vertikalen Rahmen mit Kragarm, wird die Holzbearbeitungsmaschine verhältnismäßig einfach im Aufbau und ermöglicht auch eine maßgenaue Bearbeitung. Die Schwenkachse des Anschlagslineals liegt genau an einer Seitenfläche des zu bearbeitenden Rahmenholzes an der Spitze der herzustellenden Gehrung und ist auch in ihrer Lage exakt festgelegt. Aus diesem Grund ist der Nullpunkt der Millimeter-Skala, nach welcher der am Anschlagslineal vorgesehene Längenanschlag eingestellt wird, immer in Verlängerung der Schwenkachse und die jeweilige Millimetereinstellung des Längenanschlages entspricht der gewünschten Länge des Rahmenholzes. Das fertig bearbeitete Rahmenholz weist dann auch die an der Millimeter-Skala eingestellte Länge unabhängig von der jeweils eingestellten Winkelstellung des Anschlagslineals auf. Die Handhabung der neuen Holzbearbeitungsmaschine ist damit sehr einfach. Da das Anschlagslineal gegenüber dem Arbeitstisch verschwenkt wird, kann die dem Kreissägeblatt zugekehrte Tischlängsseite bis dicht an die Sägeebene heranreichen. Hiermit wird in jeder Winkelstellung des Anschlagslineals eine gute Abstützung des Rahmenholzes bis in unmittelbare Nähe des zu bearbeitenden Endes gewährleistet. Es können deshalb mit der Holzbearbeitungsmaschine auch sehr kurze Rahmenhölzer an den Enden bearbeitet werden.

Eine besonders vorteilhafte Ausgestaltung der erfindungsgemäßen Holzbearbeitungsmaschine besteht darin, daß in der Nähe der der Sägeebene zugekehrten Tischlängsseite oberhalb der Auflagefläche des Arbeitstisches ein sich parallel zu der Tischlängsseite erstreckender, heb- und senkbarer Spannbalken für das Rahmenholz vorgesehen ist. Mit diesem Spannbalken ist es nämlich möglich, das jeweils zu bearbeitende Rahmenholz unabhängig von der Winkelstellung der Anschlagsleiste in unmittelbarer Nähe des zu bearbeitenden Endes auf dem Arbeitstisch festzuspannen, ohne daß an der Spanneinrichtung selbst irgendwelche Einstellungen vorgenommen werden müssen.

Weitere vorteilhafte Ausgestaltungen der Erfindung sind in den übrigen Unteransprüchen gekennzeichnet.

Die Erfindung ist in folgendem, anhand eines in der Zeichnung dargestellten Ausführungsbeispieles näher erläutert. Es zeigen:

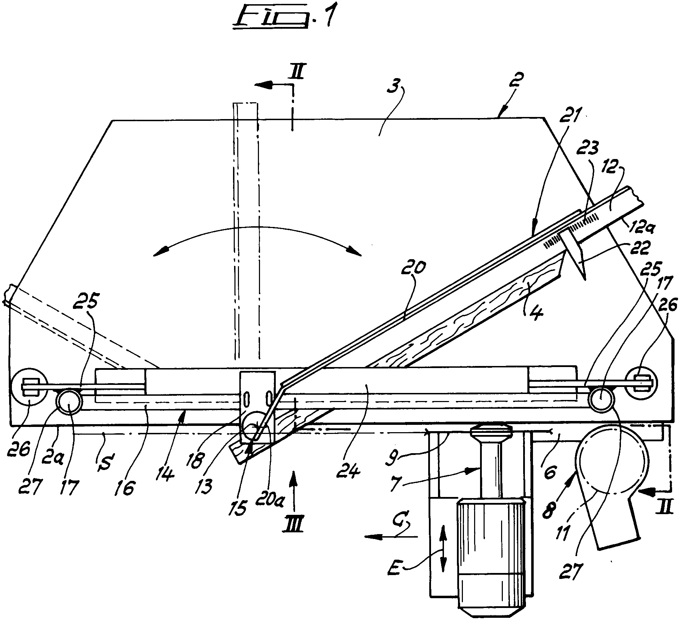

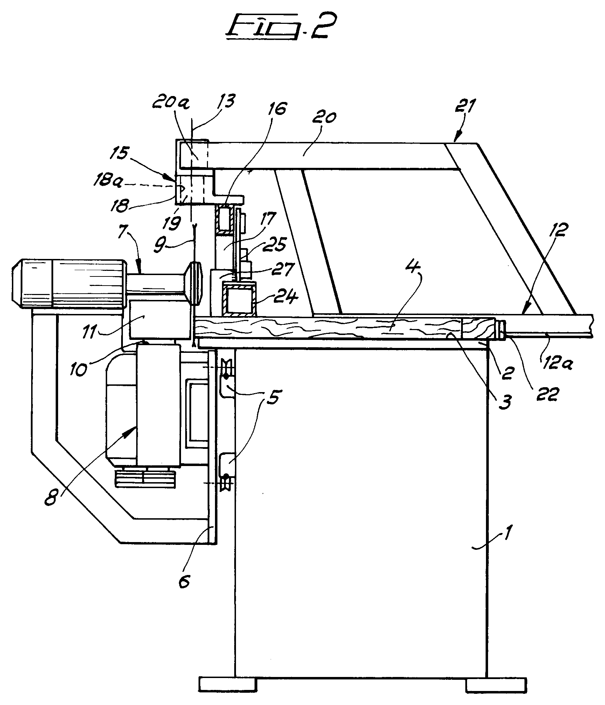

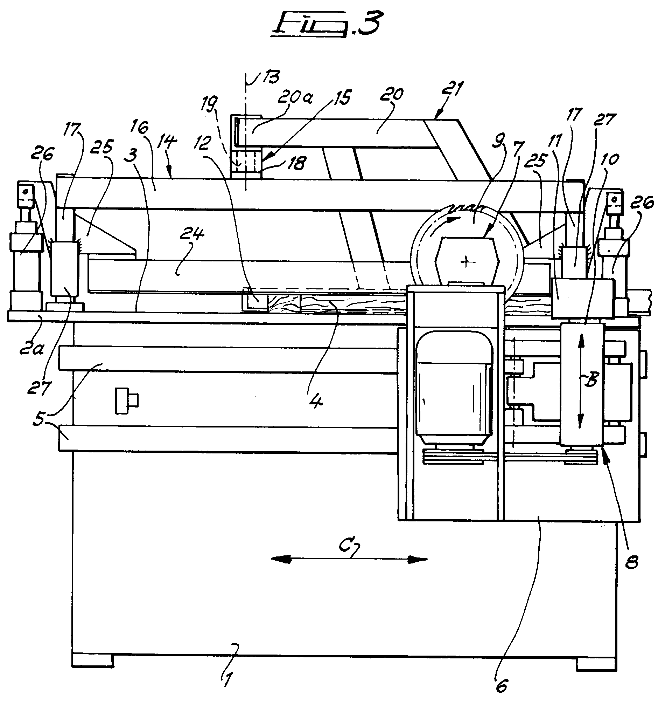

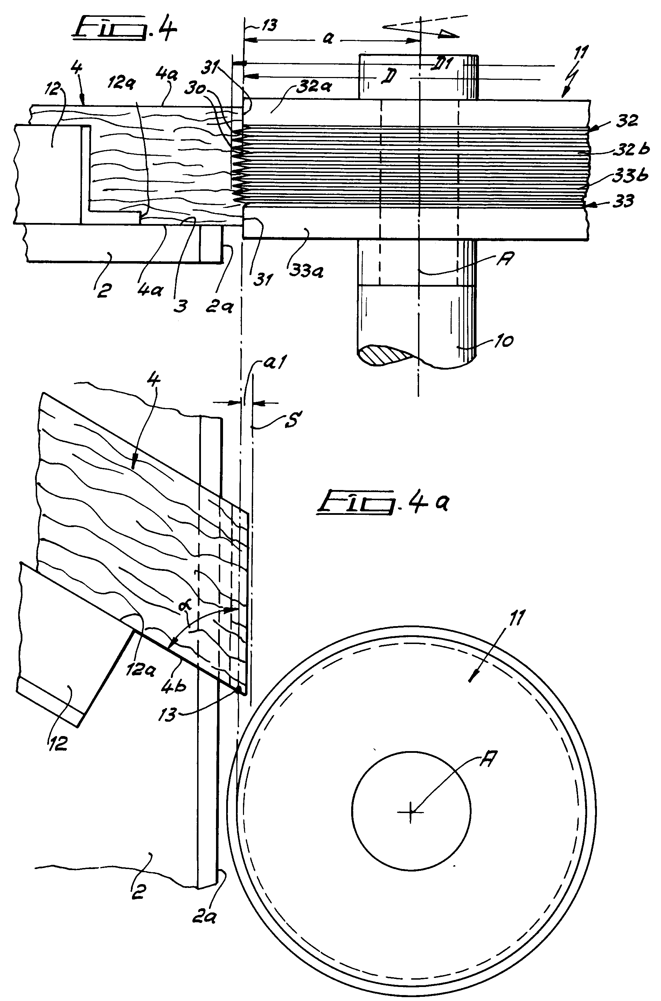

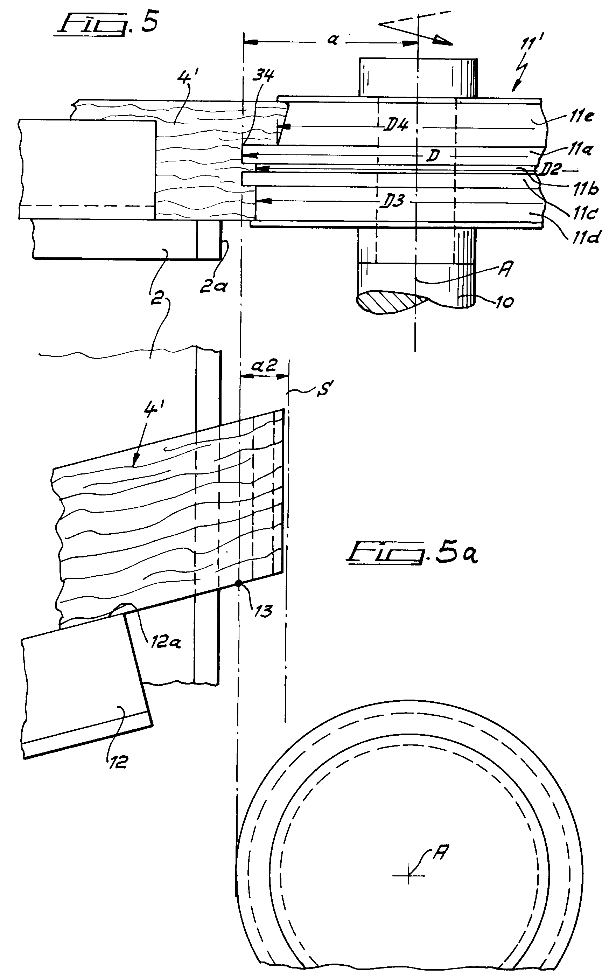

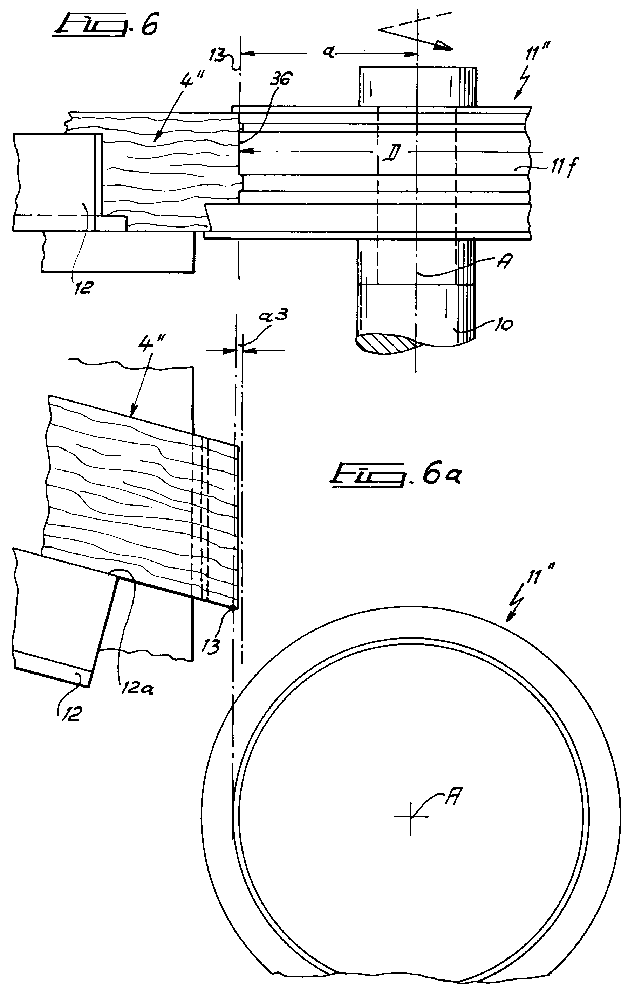

Figur 1
eine Draufsicht auf die Holzbearbeitungsmaschine,
Figur 2
einen Querschnitt nach der Linie II-II der Figur 1, wobei die Anschlagsleiste die in Figur 1 strichpunktiert dargestellte Stellung einnimmt,
Figur 3
eine Seitenansicht in Richtung III der Figur 1,
Figur 4, 5 und 6
die Ausgestaltung unterschiedlicher Fräswerkzeugsätze und ihre jeweilige Zuordnung zur Schwenkachse in Stirnansicht,
Figur 4a, 5a, 6a
die zugehörigen Draufsichten.

Auf einem Maschinengestell 1 ist ein Arbeitstisch 2 angeordnet, dessen horizontale Auflagefläche 3 zur Aufnahme und Abstützung des jeweils zu bearbeitenden Rahmenholzes 4 dient. Der Arbeitstisch 2 ist mit dem Maschinengestell 1 fest verbunden. An einer Längsseite des Maschinengestelles 1 ist an Längsführungen 5 ein Wagen 6 verfahrbar, der ein Sägeaggregat 7 und ein Fräsaggregat 8 trägt. Das Sägeaggregat 7 weist ein um eine horizontale Achse rotierendes Kreissägeblatt 9 auf. Das Fräsaggregat 8 weist eine vertikale Frässpindel 10 auf, die an ihrem oberen Ende mindestens einen Fräsersatz 11 trägt. Die Frässpindel kann auch gegebenenfalls in Pfeilrichtung B heb- und senkbar sein und dann mehrere verschiedene Fräsersätze zum Fräsen unterschiedlicher Endprofile aufweisen. Es handelt sich dann um eine sogenannte Hubspindel.

Auf dem Arbeitstisch 2 ist ein Anschlagslineal 12 um eine vertikale Schwenkachse 13 schwenkbar gelagert und in beliebigen Winkelstellungen durch eine nicht dargestellte Feststelleinrichtung gegenüber dem Arbeitstisch 2 arretierbar. Das Anschlagslineal 12 weist eine vertikale Anschlagsfläche 12a für das Rahmenholz 4 auf. Die Schwenkachse 13 ist in der Nähe der Schnittlinie der Sägeblattebene S und der durch die vertikale Anschlagsfläche 12a verlaufenden Vertikalebene angeordnet. Die genaue Lage der Schwenkachse 13 wird weiter unten stehend noch anhand der Figuren 4, 5 und 6 näher erläutert. Die der Sägeebene S zugekehrte und sich parallel hierzu erstreckende Tischlängsseite 2a reicht bis dicht an die Sägeebene S heran.

An einem Traggestell 14, welches mit dem Arbeitstisch 2 oder gegebenenfalls auch dem Maschinengestell 1 verbunden ist, ist oberhalb des Arbeitsbereiches des Kreissägeblattes 9 und des Arbeitsbereiches der Fräser 11 eine Schwenklagerung 15 angeordnet. Das Traggestell 14 weist eine in Abstand über dem Arbeitstisch 2 angeordnete Tragbrücke 16 auf, die sich parallel zur Sägeebene S erstreckt und die mittels in der Nähe der Enden des Arbeitstisches 2 angeordneter Tragpfosten 17 mit dem Arbeitstisch 2 verbunden ist. Mit der Tragbrücke 16 ist ein zur Sägeebene S hin auskragender Lagerarm 18 verbunden, der die Schwenklagerung 15 trägt. Die Schwenklagerung umfaßt einen in eine Lagerbohrung 18a des Lagerarmes 18 eingreifenden Lagerzapfen 19. Die Lagerbohrung 18a und der Lagerzapfen 19 bilden zusammen die Schwenkachse 13. Mit dem oberen Ende des Lagerzapfens 19 ist das freie Ende 20a eines Kragarmes 20 verbunden, der seinerseits Bestandteil eines vertikalen Rahmens 21 ist, der mit dem Anschlagslineal 12 verbunden ist. Auf diese Weise ist das Anschlagslineal 12 mittels der Schwenklagerung 15 um die Schwenkachse 13 schwenkbar und in verschiedenen beliebigen Winkelstellungen gegenüber der Sägeebene S feststellbar.

An dem Anschlagslineal 12 ist ferner ein Längenanschlag 22 für das Rahmenholz 4 mittels einer Millimeter-Skala 23 einstellbar und in der eingestellten Stellung in bekannter Weise feststellbar. Der Nullpunkt der Millimeter-Skala 23 liegt in Verlängerung der Schwenkachse 13.

In der Nähe der der Sägeebene S zugekehrten Tischlängsseite 2a ist oberhalb der Auflagefläche 3 des Arbeitstisches 2 ein sich parallel zu der Tischlängsseite 2a erstreckender, heb- und senkbarer Spannbalken 24 für das Rahmenholz 4 vorgesehen. An den beiden Enden des Spannbalkens 24 sind Arme 25 vorgesehen, an denen pneumatische Spannzylinder 26 angreifen. Die Arme 25 sind jeweils mit einer Führungsbüchse 27 fest verbunden, die auf dem Tragpfosten 17 vertikal verschiebbar ist. Auf diese Weise dienen die Tragpfosten 17 auch zur Führung des Spannbalkens 24. Durch Betätigung der Spannzylinder 6 kann der Spannbalken 24 gesenkt und in der Nähe des zu bearbeitenden Endes des Rahmenholzes 4 auf das Rahmenholz gedrückt werden. Auf diese Weise wird dasRahmenholz 4 auf dem Arbeitstisch 2 festgespannt.

Bei dem dargestellten vorteilhaften Ausführungsbeispiel der Holzbearbeitungsmaschine ist der Arbeitstisch 2 gegenüber dem Maschinengestell 1 stationär angeordnet und das Sägeaggregat 7 sowie das Fräsaggregat 8 sind gegenüber dem Maschinengestell 1 an den Längsführungen 5 in Richtung C verschiebbar. Diese Ausgestaltung hat den erheblichen Vorteil, daß die Gesamtlänge der Maschine nur der Länge des Arbeitstisches 2 entspricht, während bei vorbekannten Maschinen mit verfahrbarem Arbeitstisch und stationären Sägeund Fräsaggregaten die Gesamtlänge der Maschine annähernd doppelt so groß ist wie die Länge des Arbeitstisches. Darüber hinaus hat der ruhende Arbeitstisch den Vorteil, daß auch das zu bearbeitende Rahmenholz während der Bearbeitung ruht, wodurch die Unfallgefahr wesentlich verringert wird.

Die Wirkungsweise der bisher beschriebenen Holzbearbeitungsmaschine ist folgende.

Zunächst wird das Anschlagslineal 12 mittels einer nicht dargestellten Winkeleinteilung auf den gewünschten Winkel eingestellt, den das eine Ende des zu bearbeitenden Rahmenholzes gegenüber einer Längsseite des Rahmenholzes aufweisen soll. Die Anschlagsleiste 12 wird gegenüber dem Arbeitstisch 2 festgeklemmt und das Rahmenholz ohne Verwendung des Längenanschlages 22 an die Anschlagfläche 12a angelegt und zwar so, daß das zu bearbeitende Ende über die Sägeebene S hinausragt. Durch Betätigung der Spannzylinder 26 wird der Spannbalken 24 von oben her an das Rahmenholz 4 angedrückt und letzteres damit festgespannt. Der Wagen 6 mit dem Sägeaggregat 7 und dem Fräsaggregat 8 wird dann gemäß Figur 1 in Richtung C nach links verschoben, wobei das Kreissägeblatt 9 zunächst das Rahmenholz 4 ablängt und dann der Fräsersatz 11 an dem abgelängten Ende Minizinken oder Zapfen und Schlitze bzw. ein sogenanntes Konterprofil fräst. Der Spannbalken 24 wird dann angehoben und das Rahmenholz 4 aus der Holzbearbeitungsmaschine entnommen. Wenn das andere Ende des Rahmenholzes in einem anderen Winkel bearbeitet werden soll, dann ist es zunächst erforderlich, das Anschlagslineal 12 in die neue Winkelstellung zu bringen. Andernfalls kann das Anschlagslineal 12 in der eingestellten Winkellage verbleiben und es wird der Längenanschlag 22 mittels der Millimeter-Skala 23 entsprechend der gewünschten Außenlänge des Rahmenholzes eingestellt und festgeklemmt. Das Rahmenholz wird dann, wie es in Figur 1 dargestellt ist, mit der Spitze des bereits bearbeiteten Endes gegen den Längenanschlag 22 und an die Anschlagfläche 12a angelegt sowie in der beschriebenen Weise mittels des Spannbalkens 24 auf dem Arbeitstisch 2 aufgespannt. Es erfolgt dann die Bearbeitung des zweiten Endes in der beschriebenen Weise durch das Sägeaggregat 7 und das Fräsaggregat 8. Theoretisch könnte die Schwenkachse 13 auf der Schnittlinie zwischen der durch die Anschlagfläche 12a verlaufenden Vertikalebene und der Sägeebene S liegen, wobei mit Sägeebene diejenige vertikale Ebene gemeint ist, welche durch die dem Arbeitstisch 2 zugekehrte Seite des Kreissägeblattes 9 verläuft. Da jedoch ein Sägeschnitt in der Regel nicht so glatt ist wie eine gefräste Fläche, ist es zweckmäßiger, das Rahmenholz mit einem gewissen Aufmaß abzulängen, damit anschließend auch die am weitesten außen liegende Endfläche des Rahmenholzes noch durch einen Fräser gefräst werden kann. Außerdem ist es für die Abmessung und Berechnung der Länge eines Rahmenholzes einfacher, wenn man von leicht zugänglichen und leicht erfaßbaren Begrenzungsflächen ausgeht. Solche Begrenzungsflächen sind diejenigen, die bei dem auf dem Arbeitstisch 2 aufgelegten Rahmenholz senkrecht zur Auflagefläche 3 verlaufen. Dies soll anhand der Figuren 4 bis 6 näher erläutert werden.

Figur 4 zeigt ein Rahmenholz 4, welches zur Herstellung eines aus mehreren Segmenten zusammengesetzten Segmentbogens bestimmt ist. Bei derartigen Segmentbögen werden die einzelnen geraden Rahmenhölzer an ihren Enden auf Gehrung bearbeitet und zunächst zu einem mehreckigen Rahmenteil verleimt. Um die Oberfläche der miteinander verleimten Teile zu vergrößern, müssen die Rahmenhölzer an ihren Enden mit sogenannten Minizinken 30 versehen werden. Diese Minizinken werden auch als Keilzinken bezeichnet. Das Absägen des Rahmenholzes auf Gehrung mit dem zeichnerisch oder rechnerisch ermittelten Gehrungswinkel $\alpha$ sowie das Fräsen des Minizinkenprofils erfolgt mit der erfindungsgemäßen Holzbearbeitungsmaschine. Derartige Minizinken werden in der Regel so gefräst, daß in der Nähe der beiden Seitenflächen 4a des Rahmenholzes keine Zinken mehr gefräst werden sondern ebene Begrenzungsflächen 31, die genau in der Stoßfugenebene zwischen den beiden aneinandergrenzenden Rahmenhölzern verlaufen. Die ebenen Begrenzungsflächen 31 verlaufen bei auf dem Arbeitstisch aufgelegten Rahmenholz auch senkrecht zu dessen Auflagefläche 3 und mit geringem Abstand parallel zur Sägeebene S. Die Schwenkachse 13 ist genau auf der Schnittlinie der durch die Begrenzungsflächen 31 verlaufenden Vertikalebene und der durch die vertikale Anschlagsfläche 12a verlaufenden Vertikalebene angeordnet, wie aus Figur 4a ersichtlich ist. Von der Stoßfugenebene, die durch die Begrenzungsflächen 31 bestimmt wird, wird auch das Längenmaß des fertigen Rahmenholzes berechnet oder gemessen, wobei man dieses Längenmaß an der längsten Seite des auf Gehrung geschnittenen und gefrästen Rahmenholzes mißt, also gemäß Figur 4a an der am Anschlaglineal 12 anliegenden Seitenfläche 4b des Rahmenholzes. Aus diesem Grund ist es auch wichtig, wenn der theoretische Nullpunkt der Millimeter-Skala genau auf der Schwenkachse 13 angeordnet ist, auch wenn das Anschlagslineal 12 mit einigem Abstand von der Schwenkachse 13 endet, wie es aus den Figuren 4 und 5 ersichtlich ist.

In den Figuren 4 und 4a ist die Frässpindel 10 mit dem darauf angeordneten Fräsersatz 11 in einer Stellung gezeichnet, die die Frässpindel 10 einnimmt, wenn das Rahmenholz 4 bereits am Ende gefräst wurde. Bevor der Fräser das Rahmenholz 4 erreicht, wird das Rahmenholz durch das Kreissägeblatt 9 entlang der strichpunktiert eingezeichneten Sägeebene S mit einem geringen Aufmaß abgelängt.

Zwischen der Sägeebene S und der Schwenkachse 13 ist ein geringer Abstand a1 vorhanden, der etwas größer ist als die halbe Höhe der Minizinken.

Mit der erfindungsgemäßen Holzbearbeitungsmaschine können die Enden von Rahmenhölzern mit jedem beliebigen Profil versehen werden. In den Figuren 5 und 6 sind zwei sogenannte Konterprofile dargestellt, wie sie bei Schrägfenstern angewendet werden. Bei Konterprofilen wird das auf Gehrung bearbeitete schräge Rahmenholz auf die Längsseite eines horizontal oder vertikal verlaufenden Rahmenholzes aufgesetzt, wobei die Längsseite das Gegenprofil aufweist. Die in Figur 5 und 6 dargestellten Fräsersätze 11' und 11'' weisen an ihrem Umfang ein Profil auf, welches dem Längsprofil des horizontalen bzw. vertikalen Rahmenholzes entspricht. Es wäre jedoch auch möglich, mit der erfindungsgemäßen Holzbearbeitungsmaschine die Enden von Rahmenhölzern so zu profilieren, daß zwei aneinandergrenzende Rahmenhölzer mit Zapfen und Schlitzen ineinandergreifen, wie es bei Fenster- und Türrahmen, deren Rahmenhölzer rechtwinklig aneinandergrenzen, üblich ist.

Um nun auf ein und derselben Holzbearbeitungsmaschine an den Enden von Rahmenhölzern ganz unterschiedliche Profile fräsen zu können, ohne daß der Abstand der Frässpindelachse A von der Tischlängsseite 2a verändert werden muß, sind die nachstehenden Bemessungen der maßgebenden Fräser bzw. Fräserabschnitte von Vorteil. Fräsersätze 11, welche zum Fräsen von Minizinken verwendet werden, bestehen meist aus zwei Fräsern 32, 33, die axial gegeneinander verstellbar sind, um je nach Holzdicke eine unterschiedliche Anzahl von Minizinken 30 fräsen zu können. Diejenigen Fräserabschnitte 32a, 33a, welche die senkrecht zu der Auflagefläche des Arbeitstisches verlaufenden Begrenzungsflächen 31 fräsen, sind als maßgebende Fräserabschnitte bezeichnet. Diese maßgebenden Fräserabschnitte 32a, 33a haben einen bestimmten Flugkreisdurchmesser oder Arbeitsdurchmesser D. Der Abstand a der vertikalen Bewegungsebene, in welcher sich die Frässpindelachse A bewegt, von der Schwenkachse 13 entspricht dem halben Flugkreisdurchmesser D. Die Flugkreisdurchmesser D1 der übrigen Fräserabschnitte 32b, 33b, mit welchem die Minizinken gefräst werden, sind um die Höhe der Minizinken größer als der Flugkreisdurchmesser D der maßgebenden Fräserabschnitte 32a, 33a. In Figur 5 ist nun ein Fräsersatz 11' dargestellt, welcher zum Fräsen eines sogenannten Konterprofils am Ende des Rahmenholzes 4' dient. Dieser Fräsersatz 11' besteht aus mehreren einzelnen Fräsern 11a, 11b, 11c, 11d, 11e. Der Fräser 11a dient zum Fräsen der Begrenzungsfläche 34, die senkrecht zur Auflagefläche 3 verläuft. Da die entsprechende Fläche am nicht dargestellten Gegenprofil leicht zugänglich und zu messen ist, ist der Fräser 11a, welcher die Begrenzungsfläche 34 fräst, der maßgebende Fräser. Der Flugkreisdurchmesser D dieses maßgebenden Fräsers 11a wird nun genauso groß gewählt wie der Flugkreisdurchmesser D des maßgebenden Fräserabschnittes 32a oder 33a. Auf diese Weise kann der Abstand a zwischen der Bewegungsebene der Frässpindelachse A und der Schwenkachse 13 trotz der Verwendung eines anderen Fräsersatzes 11' konstant bleiben. Die Flugkreisdurchmesser D2, D3 und D4 der übrigen Fräser 11b - 11e sind auf den Flugkreisdurchmesser D des maßgebenden Fräsers 11a abgestimmt. Da bei diesem zu fräsenden Profil die Zapfen und Schlitze am fertig bearbeiteten Rahmenholz 4' größere Höhenunterschiede aufweisen, ist der Abstand a2 der Sägeebene S von der festliegenden Schwenkachse 13 etwas größer als der Abstand a1 beim Fräsen von Minizinken. Damit die Sägeebene S gegenüber der Schwenkachse 13 verändert werden kann, ist das Sägeaggregat 7 in Richtung E, also in Richtung der Sägenachse verstellbar.

In Figur 6 und 6a ist ein anderer Fräsersatz 11'' dargestellt, der zum Fräsen eines anderen Konterprofils am Rahmenholz 4'' dient. Bei diesem Fräsersatz 11'' wurde der Fräser 11f als maßgebender Fräser gewählt, der die Begrenzungsfläche 36 am Rahmenholz 4" fräst. Der Flugkreisdurchmesser D dieses maßgebenden Fräsers 11f ist gleich groß wie die Flugkreisdurchmesser D der Fräserabschnitte 32a, 33a bzw. des maßgebenden Fräsers 11a. Die Flugkreisdurchmesser der übrigen Fräser des Fräsersatzes 11' sind auf den Flugkreisdurchmesser D des maßgebenden Fräsers 11f abgestimmt. Zum Ablängen des Rahmenholzes 4" wurde das Sägeaggregat 7 so eingestellt, daß die Sägeebene S in einem Abstand a3 von der Schwenkachse 13 verläuft.

Die verschiedenen Fräsersätze 11, 11', 11" können entweder bedarfsweise auf der Frässpindel 10 einzeln montiert werden, oder sie können auch in Abstand übereinander auf einer heb- und senkbaren Frässpindel, einer sogenannten Hubspindel, angeordnt sein. In diesem Fall wird dann die Hubspindel bzw. das gesamte Fräsaggregat durch vertikale Bewegung in Richtung B in die jeweils erforderliche Höhenstellung gebracht, so daß einer der Fräsersätze 11, 11', 11" sich in Höhe des jeweils zu bearbeitenden Rahmenholzes befindet.

**Patentansprüche**

1. Holzbearbeitungsmaschine zur Endenbearbeitung von Rahmenhölzern, insbesondere für Fenster- und Türrahmen, mit einem Arbeitstisch, einem Sägeaggregat mit einem um eine horizontale Achse rotierenden Kreissägeblatt und einem Fräsaggregat mit vertikaler Frässpindel und mehreren hieran angeordneten Fräsern, wobei die beiden Aggregate in Richtung der Sägeebene relativ zum Arbeitstisch bewegbar sind und am Arbeitstisch ein um eine vertikale Schwenkachse schwenkbares und in der eingestellten Winkelstellung feststellbares Anschlagslineal mit einer vertikalen Anschlagfläche für eine Längsseite des Rahmenholzes und mit einem mittels einer Millimeter-Skala einstellbaren Längenanschlag vorgesehen ist und wobei die Schwenkachse an oder in der Nähe der Schnittlinie der Sägeebene und der durch die vertikale Anschlagsfläche verlaufenden Vertikalebene angeordnet ist, **dadurch gekennzeichnet**, daß an einem mit dem Arbeitstisch (2) oder dem Maschinengestell (1) verbundenen Traggestell (14) oberhalb des Arbeitsbereiches des Kreissägeblattes (9) und der Fräser (11) eine die vertikale Schwenkachse (13) enthaltende Schwenklagerung (15) angeordnet ist, daß an dem Anschlagslineal (12) ein vertikaler Rahmen (21) mit einem Kragarm (20) vorgesehen ist, dessen freies Ende (20a) mit der Schwenkachse (13, 19) verbunden ist, und daß die der Sägeebene (S) zugekehrte und sich parallel hierzu erstreckende Tischlängsseite (2a) bis dicht an die Sägeebene heranreicht.

2. Holzbearbeitungsmaschine nach Anspruch 1, **dadurch gekennzeichnet**, daß das Traggestell (14) eine in Abstand über dem Arbeitstisch angeordnete Tragbrücke (16) aufweist, die sich parallel zur Sägeebene (S) erstreckt und die mittels in der Nähe der beiden Enden des Arbeitstisches (2) angeordneter Tragpfosten (17) mit diesem verbunden ist.

3. Holzbearbeitungsmaschine nach Anspruch 2, **dadurch gekennzeichnet**, daß mit der Tragbrücke (16) ein zur Sägeebene (S) hin auskragender Lagerarm (18) verbunden ist, der die Schwenklagerung (15) trägt.

4. Holzbearbeitungsmaschine nach Anspruch 1 oder 2 oder 3, **dadurch gekennzeichnet**, daß in der Nähe der der Sägeebene (S) zugekehrten Tischlängsseite (2a) oberhalb der Auflagefläche (3) des Arbeitstisches (2) ein sich parallel zu der Tischlängsseite (2a) erstreckender, heb- und senkbarer Spannbalken (24) für das Rahmenholz (4) vorgesehen ist.

5. Holzbearbeitungsmaschine nach Anspruch 2 und 4, **dadurch gekennzeichnet**, daß der Spannbalken (24) mittels Führungsbüchsen (27), die auf den Tragpfosten (17) vertikal verschiebbar sind, geführt ist.

6. Holzbearbeitungsmaschine nach Anspruch 4, 5 oder 6, **dadurch gekennzeichnet**, daß zur Betätigung des Spannbalkens (24) zwei pneumatische Spannzylinder (26) vorgesehen sind.

7. Holzbearbeitungsmaschine nach einem der Ansprüche 1 - 6, **dadurch gekennzeichnet**, daß der Arbeitstisch (2) gegenüber dem Maschinengestell (1) stationär und das Sägeaggregat (7) sowie das Fräsaggregat (8) gegenüber dem Maschinengestell (1) verschiebbar angeordnet sind.

8. Holzbearbeitungsmaschine nach einem der Ansprüche 1 - 7, **dadurch gekennzeichnet**, daß das Sägeaggregat (7) gegenüber dem Arbeitstisch (2) in Richtung (E) der Sägenachse verstellbar ist.

9. Holzbearbeitungsmaschine nach einem der Ansprüche 1 - 8, **dadurch gekennzeichnet**, daß bei mehreren unterschiedlichen Fräsersätzen (11, 11', 11"), die an den Enden der Rahmenhölzer (4, 4', 4") unterschiedliche Profile fräsen, jeweils der maßgebende Fräser (11a, 11f) oder der maßgebende Fräserabschnitt (32a, 33a), der am Ende eine senkrecht zu der Auflagefläche (3) des Arbeitstisches (2) verlaufende Begrenzungsfläche (31, 34, 36) fräst, den gleichen Flugkreisdurchmesser (D) aufweist, wie ein entsprechender maßgebender Fräser oder ein maßgebender Fräserabschnitt eines unterschiedlichen Fräsersatzes, daß die Flugkreisdurchmesser (D1 - D4) der übrigen Fräser (11b - 11e) oder Fräserabschnitte (32b, 33b) jedes Fräsersatzes (11, 11', 11'') auf den maßgebenden Fräser (11a, 11f) oder maßgebenden Fräserabschnitt (32a, 33a) abgestimmt sind und daß die vertikale Bewegungsebene, in welcher sich die Frässpindelachse (A) bewegt, gegenüber der Schwenkachse (13) in einem konstanten Abstand (a) angeordnet ist, welcher dem halben Flugkreisdurchmesser (D) der maßgebenden Fräser (11a, 11f) oder Fräserabschnitte (32a, 33a) entspricht.

FIG.1

FiG.2

FIG.3

EP 0 483 499 A2

**FIG.4**

13
a
11
31
32a
D1
D
12 4 12a 4a 30
32
32 b
33b
33
12 4a 3 2a 31 33a
A
2
10

a1
S

**FIG.4a**

4
α
12a
4b
13
11
12
A
2
2a
12

FIG.5

FIG.5a

FIG.6

FIG.6a